(19) Europäisches Patentamt
European Patent Office
Office européen des brevets

(11) **EP 3 789 786 B1**

(12) **EUROPEAN PATENT SPECIFICATION**

(45) Date of publication and mention of the grant of the patent:
**13.07.2022 Bulletin 2022/28**

(21) Application number: **18922029.6**

(22) Date of filing: **08.06.2018**

(51) International Patent Classification (IPC):
*G01S 7/481* (2006.01)     *G01S 7/497* (2006.01)
*G01S 17/95* (2006.01)     *G01S 17/58* (2006.01)
*G01S 7/483* (2006.01)

(52) Cooperative Patent Classification (CPC):
**G01S 17/58; G01S 7/481; G01S 7/4817;**
**G01S 7/483; G01S 7/497; G01S 17/95;** Y02A 90/10

(86) International application number:
**PCT/JP2018/022083**

(87) International publication number:
**WO 2019/234926 (12.12.2019 Gazette 2019/50)**

(54) **LASER RADAR DEVICE**

LASERRADARVORRICHTUNG

DISPOSITIF RADAR À LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**10.03.2021 Bulletin 2021/10**

(73) Proprietor: **Mitsubishi Electric Corporation Tokyo 100-8310 (JP)**

(72) Inventors:
• **YOSHIKI, Wataru**
  **Tokyo 1008310 (JP)**
• **ITO, Yusuke**
  **Tokyo 1008310 (JP)**

• **YANAGISAWA, Takayuki**
  **Tokyo 1008310 (JP)**
• **KAMEYAMA, Shumpei**
  **Tokyo 1008310 (JP)**

(74) Representative: **Pfenning, Meinig & Partner mbB Patent- und Rechtsanwälte Theresienhöhe 11a 80339 München (DE)**

(56) References cited:
EP-A1- 3 249 422          WO-A1-2016/117159
WO-A1-2017/085799       WO-A1-2017/085799
JP-A- H0 445 415         JP-A- S5 034 248
JP-A- H04 255 819       JP-A- H07 181 412
JP-A- H10 300 851       JP-B2- S6 222 409

EP 3 789 786 B1

## Description

## TECHNICAL FIELD

The present invention relates to a laser radar device for measuring wind speed.

## BACKGROUND ART

For example, the laser radar device described in Patent Literature 1 emits transmission light that is laser pulse light into the atmosphere, and receives scattered light, which is the transmission light scattered by aerosol, as reception light. Aerosol is dust in the atmosphere, and refers to fine airborne particles. Laser radar devices obtain a Doppler shift of the frequency of reception light generated by movement of aerosol by heterodyne detection of continuous light of a single frequency that is local light of transmission light and the reception light, and measures wind speed in a laser emission direction from the Doppler shift. The Doppler shift can be calculated from a spectrum obtained by Fourier transform of a signal of the reception light detected by heterodyne detection. The direction of wind speed measurement is changed by switching the laser emission direction.

In a laser radar device, an optical axis angular shift occurs between transmission light and reception light in association with beam scanning. An optical axis angular shift includes an azimuth shift, which is a shift of an optical axis of reception light in the azimuth direction with respect to an optical axis of transmission light, and an elevation angle shift, which is a shift of the optical axis of the reception light in the elevation direction with respect to the optical axis of the transmission light.

Hereinafter, the former is referred to as an azimuth component of an optical axis angular shift, and the latter is referred to as an elevation angle component of the optical axis angular shift. The azimuth component of an optical axis angular shift changes depending on the beam scanning angle, and the elevation angle component of the optical axis angular shift changes depending on the beam scanning speed.

In a case where there is an optical axis angular shift between transmission light and reception light, the coupling efficiency of the reception light decreases and the reception intensity decreases, and thus it is necessary to correct the optical axis angular shift. The conventional laser radar device described in Patent Literature 1 includes an optical axis correction unit that simultaneously corrects both the azimuth component of an optical axis angular shift and the elevation angle component of the optical axis angular shift.

## CITATION LIST

## PATENT LITERATURE

Patent Literature 1: WO 2016/117159

## SUMMARY OF INVENTION

## TECHNICAL PROBLEM

Since the azimuth component of an optical axis angular shift changes every moment depending on the beam scanning angle, the correction amount of the azimuth is continuously controlled in the correction of the azimuth component of the optical axis angular shift. Since continuous control imposes a heavy load on the optical axis correction unit, regular maintenance and inspection is required. On the other hand, the elevation angle component of an optical axis angular shift does not change as long as the beam scanning speed is constant, and thus it is not required to frequently control the correction amount of the elevation angle.

In the laser radar device described in Patent Literature 1, since a single optical axis correction unit corrects both the azimuth component of an optical axis angular shift and the elevation angle component of the optical axis angular shift, there is a disadvantage that maintenance and inspection cannot be independently performed on correction of the azimuth component of an optical axis angular shift, which has a high load and requires regular maintenance and inspection, and correction of the elevation angle component of the optical axis angular shift, which has a relatively low load and does not require more frequent maintenance and inspection than the correction of the azimuth component.

The present invention is devised to solve the above disadvantage, and an object of the invention is to obtain a laser radar device capable of independently performing maintenance and inspection for correction of the azimuth component of an optical axis angular shift and maintenance and inspection for correction of the elevation angle component of the optical axis angular shift.

## SOLUTION TO PROBLEM

The invention is set out in the appended set of claims.

## ADVANTAGEOUS EFFECTS OF INVENTION

According to the present invention, the optical axis correction unit includes a first correction unit correcting an azimuth component of the optical axis angular shift and a second correction unit correcting an elevation angle component of the optical axis angular shift. The first correction unit is disposed separately from the second correction unit. The first correction unit includes a group of mirrors including a plurality of mirrors guiding an incident laser beam to an emission side while reflecting the laser beam, and corrects the azimuth component of the optical axis angular shift by controlling rotation of the group of mirrors. As a result, it is possible to independently perform maintenance and inspection for correction of the azimuth component of an optical axis angular shift and maintenance and inspection for correction of the elevation angle component of the optical axis angular shift.

## BRIEF DESCRIPTION OF DRAWINGS

FIG. 1 is a block diagram illustrating a configuration of a laser radar device according to a first embodiment of the present invention.
FIG. 2 is a diagram illustrating a configuration of a beam scanning optical system in the first embodiment.
FIG. 3 is a diagram illustrating a configuration of an azimuth correction unit in the first embodiment.
FIG. 4 is a diagram illustrating a configuration of an elevation angle correction unit in the first embodiment.
FIG. 5 is a flowchart illustrating the operation of the laser radar device according to the first embodiment.
FIG. 6 is a block diagram illustrating a configuration of a laser radar device according to a second embodiment of the present invention.
FIG. 7 is a diagram illustrating a configuration of an azimuth correction unit according to the second embodiment.
FIG. 8 is a flowchart illustrating the operation of the laser radar device according to the second embodiment.
FIG. 9 is a block diagram illustrating a configuration of a laser radar device according to a third embodiment of the present invention.
FIG. 10 is a diagram illustrating a configuration of an azimuth correction unit according to the third embodiment.
FIG. 11 is a flowchart illustrating the operation of the laser radar device according to the third embodiment.

## DESCRIPTION OF EMBODIMENTS

To describe the present invention further in detail, embodiments for carrying out the invention will be described below with reference to the accompanying drawings.

First Embodiment

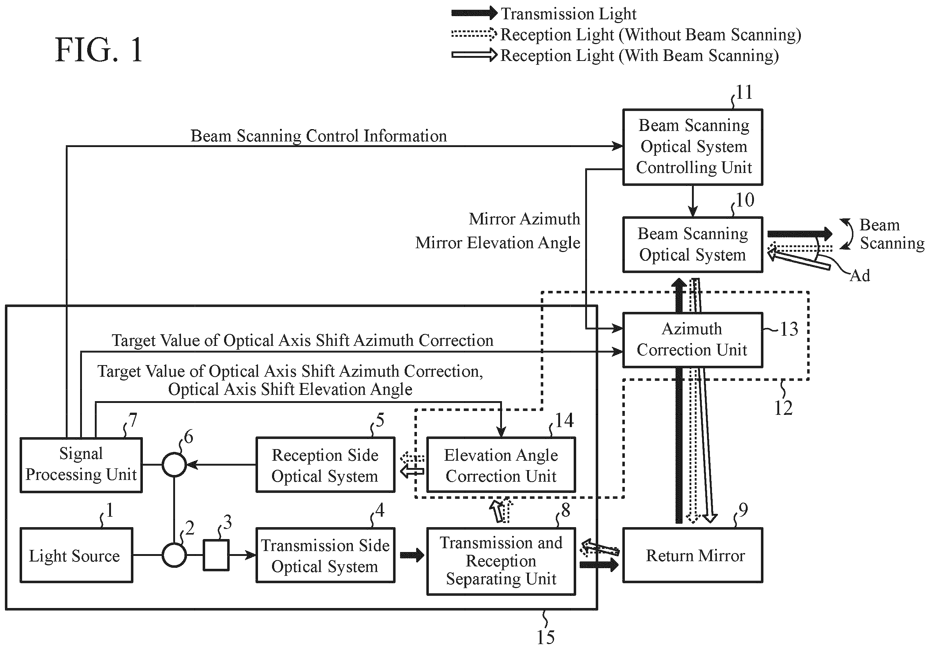

FIG. 1 is a block diagram illustrating a configuration of a laser radar device according to the first embodiment of the invention. The laser radar device illustrated in FIG. 1 emits transmission light that is laser pulse light into the atmosphere, receives scattered light, which is transmission light scattered by aerosol, as reception light, and measures wind speed in the laser emission direction. The direction of wind speed measurement is changed by switching the laser emission direction.

As illustrated in FIG. 1, the laser radar device includes a light source 1, an optical distributor 2, a pulse modulator 3, a transmission side optical system 4, a reception side optical system 5, an optical coupler 6, a signal processing unit 7, a transmission and reception separating unit 8, a return mirror 9, a beam scanning optical system 10, a beam scanning optical system controlling unit 11, and an optical axis correction unit 12. The optical axis correction unit 12 includes an azimuth correction unit 13 and an elevation angle correction unit 14. A device body 15 houses the light source 1, the optical distributor 2, the pulse modulator 3, the transmission side optical system 4, the reception side optical system 5, the optical coupler 6, the signal processing unit 7, the transmission and reception separating unit 8, and the elevation angle correction unit 14.

The light source 1 is connected to the optical distributor 2 and generates laser light. The laser light generated by the light source 1 is continuous light having a single frequency in a wavelength band that can be reflected by an emission target. Note that reflection includes scattering of laser light by an emission target. The pulse modulator 3 and the optical coupler 6 are further connected to the optical distributor 2. The optical distributor 2 divides the laser light from the light source 1 into two parts, and distributes one of the two parts to the pulse modulator 3, and the other part to the optical coupler 6. The pulse modulator 3 is connected to the transmission side optical system 4 and converts the laser light input from the optical distributor 2 into a pulse. The pulse modulator 3 has the function of performing pulse modulation and the function of giving a preset frequency shift to the laser light input from the optical distributor 2.

The transmission side optical system 4 is an optical system that optically processes the laser light converted into a pulse by the pulse modulator 3 and then outputs the laser light as transmission light. The optical processes include the process of shaping laser light to have a desired beam diameter and divergence angle. The transmission and reception separating unit 8 is disposed between the transmission side optical system 4 and the return mirror 9 and on the optical axis of transmission light, and outputs the transmission light input from the transmission side optical system 4 to the return mirror 9 and outputs reception light input from the return mirror 9 to the elevation angle correction unit 14. The return mirror 9 is disposed between the transmission and reception separating unit 8 and the azimuth correction unit 13 and on the optical axis of the transmission light, and outputs the transmission light input from the transmission and reception separating unit 8 to the azimuth correction unit 13 and outputs reception light input from the azimuth correction unit 13 to the transmission and reception separating unit 8.

The beam scanning optical system 10 has the function of emitting transmission light into the atmosphere and the function of scanning with a laser beam, and is disposed on the optical axis of the transmission light. The beam scanning optical system controlling unit 11 controls the beam scanning by the beam scanning optical system 10 on the basis of beam scanning control information input from the signal processing unit 7. Furthermore, the beam scanning optical system controlling unit 11 outputs, to the azimuth correction unit 13, mirror angle information including the emission direction of transmission light, that is, the mirror azimuth indicating the beam scanning azimuth and the mirror elevation angle indicating the beam scanning elevation angle.

The beam scanning unit that performs scanning with a laser beam is implemented by the beam scanning optical system 10 and the beam scanning optical system controlling unit 11.

The optical axis correction unit 12 corrects an optical axis angular shift Ad generated between transmission light and reception light in association with beam scanning. As illustrated in FIG. 1, the optical axis correction unit 12 includes the azimuth correction unit 13 and the elevation angle correction unit 14. The azimuth correction unit 13 is disposed separately from the elevation angle correction unit 14. For example, the azimuth correction unit 13 is disposed outside the device body 15, and the elevation angle correction unit 14 is disposed inside the device body 15. As a result, in the laser radar device according to the first embodiment, maintenance and inspection of the azimuth correction unit 13 can be performed independently of the elevation angle correction unit 14.

The azimuth correction unit 13 is a first correction unit that corrects the azimuth component of an optical axis angular shift, and is disposed between the return mirror 9 and the beam scanning optical system 10 and on the optical axis of transmission light.

The azimuth correction unit 13 outputs the transmission light input from the return mirror 9 to the beam scanning optical system 10 and corrects the azimuth component of the optical axis angular shift in reception light input from the beam scanning optical system 10, and then outputs the corrected reception light to the return mirror 9.

The elevation angle correction unit 14 is a second correction unit that corrects the elevation angle component of the optical axis angular shift generated between the transmission light and the reception light in association with beam scanning. The elevation angle correction unit 14 is disposed between the reception side optical system 5 and the transmission and reception separating unit 8 and so that the optical axis of reception light input from the transmission and reception separating unit 8 and the optical axis of the elevation angle correction unit 14 (optical axes of two wedge prisms described later) coincide with each other when the beam scanning is stopped.

The reception side optical system 5 is an optical system that performs optical processes on reflection light, which is the transmission light reflected by an object, and then outputs the processed reflection light as reception light. The optical processes include the process of shaping the reception light from the elevation angle correction unit 14 to have a desired beam diameter and divergence angle. The object may be, for example, aerosol. The optical coupler 6 combines the reception light input from the reception side optical system 5 and the laser light distributed from the optical distributor 2 (transmission light) and outputs the combined light to the signal processing unit 7.

The signal processing unit 7 performs a wind speed measuring process using the signal combined by the optical coupler 6.

For example, the signal processing unit 7 has the function of deriving a frequency shift from the reception light by heterodyne detection of continuous light of a single frequency which is the local light of the transmission light and the reception light, and the function of calculating the wind speed from the frequency shift. In a case where the emission target of transmission light is aerosol, the frequency shift is a Doppler shift caused by the movement of the aerosol.

The signal processing unit 7 generates beam scanning control information on the basis of the combined signal input from the optical coupler 6. The beam scanning control information is control information for specifying a beam scanning angular velocity and a beam scanning method, and is set in the beam scanning optical system controlling unit 11 by the signal processing unit 7.

Further, the signal processing unit 7 outputs a target value of optical axis shift azimuth correction to the azimuth correction unit 13 and the elevation angle correction unit 14, and outputs optical axis shift elevation angle information to the elevation angle correction unit 14.

The target value of the optical axis shift azimuth correction is a target value of the azimuth for correction of the azimuth component of the optical axis angular shift, and is generated by the signal processing unit 7 on the basis of the combined signal input from the optical coupler 6.

The optical axis shift elevation angle information includes the amount of shift in the elevation direction of the optical axis angular shift (hereinafter referred to as the elevation angle of the optical axis shift), and is generated by the signal processing unit 7 on the basis of the combined signal input from the optical coupler 6.

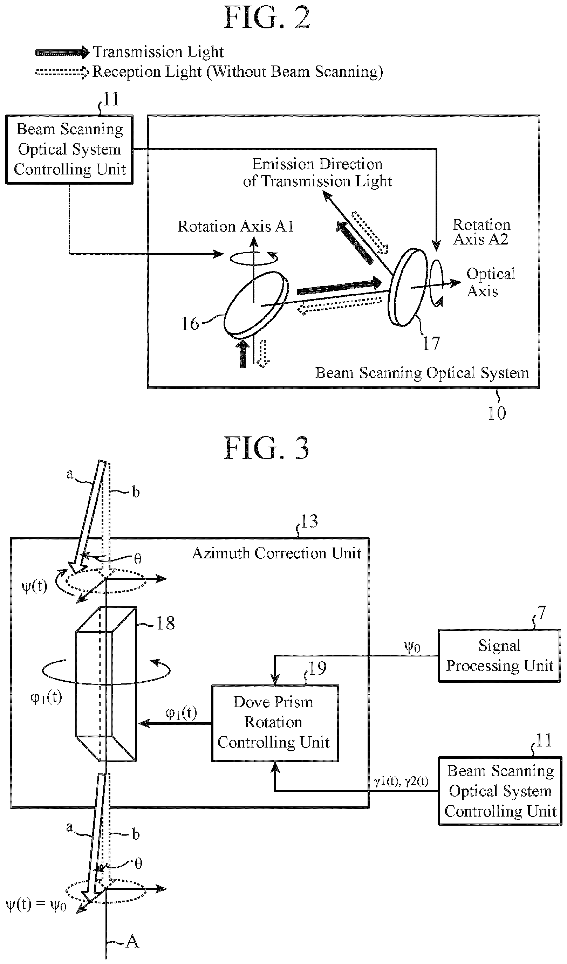

FIG. 2 is a diagram illustrating a configuration of the beam scanning optical system 10. The beam scanning optical system 10 includes an azimuth changing mirror 16 and an elevation angle changing mirror 17, as illustrated in FIG. 2. The azimuth changing mirror 16 changes the emission direction of the transmission light (scanning direction of a laser beam) with respect to the azimuth direction, and is disposed between the azimuth correction unit 13 and the elevation angle changing mirror 17. The elevation angle changing mirror 17 changes the emission direction of the transmission light with respect to the elevation direction, and is disposed between the azimuth changing mirror 16 and the irradiation space of the transmission light. The azimuth changing mirror 16 and the elevation angle changing mirror 17 receive scattered light of the transmission light scattered by scatterers (for example, aerosol) in the atmosphere, and guides the reception light to the azimuth correction unit 13.

The beam scanning optical system controlling unit 11 controls the rotation of the azimuth changing mirror 16 and the rotation of the elevation angle changing mirror 17 in the beam scanning optical system 10. By this control, the emission direction of the transmission light, that is, the beam scanning azimuth and the beam scanning elevation angle are controlled. The azimuth changing mirror 16 has a rotation axis A1, and the elevation angle changing mirror 17 has a rotation axis A2. The rotation axis A1 and the rotation axis A2 are mutually independent rotation axes. The azimuth of the emission direction of the transmission light is changed when the azimuth changing mirror 16 is rotated around the rotation axis A1, and the elevation angle of the emission direction of the transmission light is changed when the elevation angle changing mirror 17 is rotated around the rotation axis A2.

The emission direction of the transmission light can be changed within the range of 0 to 360 degrees in the azimuth direction by rotating the azimuth changing mirror 16 about the rotation axis A1 with the rotation angle of the elevation angle changing mirror 17 fixed. Note that the elevation angle changing mirror 17 is fixed to the same rotation coordinate system when the azimuth changing mirror 16 is rotated about the rotation axis A1. At this time, the elevation angle of the emission direction of the transmission light is determined by the rotation angle of the elevation angle changing mirror 17.

The mirror angle information output from the beam scanning optical system controlling unit 11 to the azimuth correction unit 13 includes the rotation angle of the azimuth changing mirror 16 as a mirror azimuth indicating the beam scanning azimuth and the rotation angle of the elevation angle changing mirror 17 as the mirror elevation angle indicating the beam scanning elevation angle.

FIG. 3 is a diagram illustrating a configuration of the azimuth correction unit 13 in the first embodiment. As illustrated in FIG. 3, the azimuth correction unit 13 includes a Dove prism 18 and a Dove prism rotation controlling unit 19. The Dove prism 18 is disposed so that the optical axis A of the Dove prism 18 coincides with the traveling direction b of the reception light when beam scanning is halted.

When beam scanning is executed, the traveling direction of the reception light incident on the azimuth correction unit 13 from the return mirror 9 is directed along arrow a illustrated in FIG. 3. Since the optical axis of the transmission light coincides with the traveling direction b of the reception light when beam scanning is halted, the optical axis is shifted in the azimuth direction by a shift amount $\theta$ between the transmission light and the reception light when beam scanning is started. The Dove prism 18 corrects the azimuth component of such an optical axis angular shift.

The Dove prism rotation controlling unit 19 is connected to the signal processing unit 7 and the beam scanning optical system controlling unit 11, and controls the rotation of the Dove prism 18 about the optical axis A. For example, to the Dove prism rotation controlling unit 19, a target value $\psi_0$ of optical axis shift azimuth correction is input from the signal processing unit 7, and mirror angle information $\gamma_1(t)$, $\gamma_2(t)$ is input from the beam scanning optical system controlling unit 11. The Dove prism rotation controlling unit 19 calculates a rotation angle $\Phi_1(t)$ on the basis of the target value $\psi_0$ and the mirror angle information $\gamma_1(t)$, $\gamma_2(t)$, and controls the rotation of the Dove prism 18 on the basis of the rotation angle $\Phi_1(t)$. Here, $\gamma_1(t)$ denotes the rotation angle of the azimuth changing mirror 16 (mirror azimuth), and $\gamma_2(t)$ denotes the rotation angle of the elevation angle changing mirror 17 (mirror elevation angle). Symbol t is a variable of time. The emission direction of the transmission light (the scanning direction of the laser beam) is uniquely determined by $\gamma_1(t)$ and $\gamma_2(t)$.

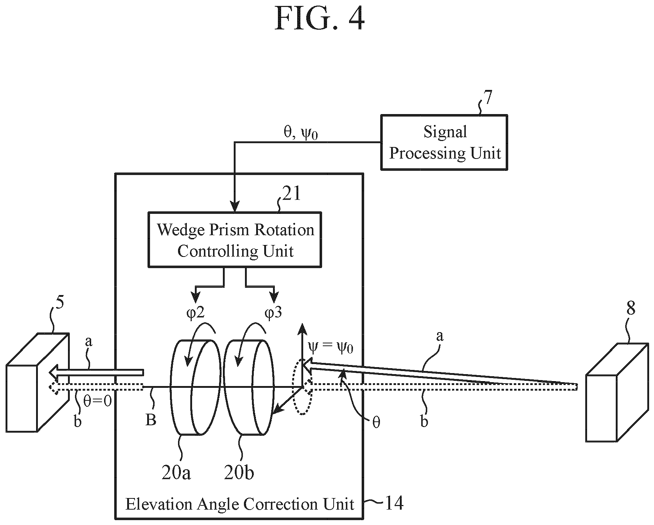

FIG. 4 is a diagram illustrating a configuration of the elevation angle correction unit 14 in the first embodiment. As illustrated in FIG. 4, the elevation angle correction unit 14 includes a wedge prism 20a, a wedge prism 20b, and a wedge prism rotation controlling unit 21. The traveling direction b of the reception light input from the transmission and reception separating unit 8 to the elevation angle correction unit 14 when beam scanning is halted coincides with the optical axis B of the wedge prism 20a and the wedge prism 20b.

On the other hand, when beam scanning is performed, the traveling direction of the reception light input from the transmission and reception separating unit 8 to the elevation angle correction unit 14 is in the direction of arrow a illustrated in FIG. 4. Since the optical axis of the transmission light coincides with the traveling direction b of the reception light when beam scanning is halted, the optical axis is shifted in the elevation direction by a shift amount $\theta$ between the transmission light and the reception light in association with beam scanning. The wedge prism 20a and the wedge prism 20b correct the elevation angle component of the optical axis angular shift in the reception light, the azimuth of which is fixed to the target value $\psi_0$ by the azimuth correction unit 13.

The wedge prism rotation controlling unit 21 is connected to the signal processing unit 7 and controls the rotation of the wedge prism 20a and the wedge prism 20b about the optical axis B. For example, the wedge prism rotation controlling unit 21 receives input of the optical axis shift elevation angle information including the elevation angle $\theta$ of the optical axis shift (the shift amount $\theta$ of the optical axis angular shift in the elevation direction), and the target value $\psi_0$ of the optical axis shift azimuth correction from the signal processing unit 7. The wedge prism rotation controlling unit 21 calculates a rotation angle $\Phi2$ of the wedge prism 20a and the rotation angle Φ3 of the wedge prism 20b on the basis of the elevation angle θ of the optical axis shift and the target value $\psi_0$ of the optical axis shift azimuth correction in the optical axis shift elevation angle information. Then, the wedge prism rotation controlling unit 21 controls the rotation of the wedge prism 20a and the wedge prism 20b on the basis of the rotation angle Φ2 and the rotation angle Φ3.

The wedge prism 20a and the wedge prism 20b each have a flat surface and an inclined surface facing the flat surface, as illustrated in FIG. 4. In the elevation angle correction unit 14, the wedge prism 20a and the wedge prism 20b are arranged so that the flat surfaces are parallel to each other and that the traveling direction b (optical axis B) of the reception light, incident from the transmission and reception separating unit 8 when beam scanning is halted, is orthogonal to both of the flat surfaces. The wedge prism 20a is disposed on the reception side optical system 5 side, and the wedge prism 20b is disposed on the transmission and reception separating unit 8 side.

Next, the operation will be described.

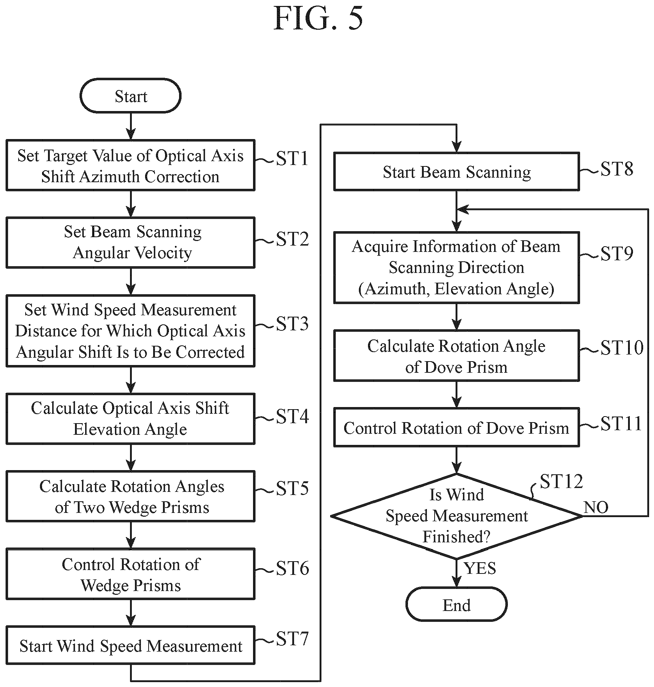

FIG. 5 is a flowchart illustrating the operation of the laser radar device according to the first embodiment.

Before starting beam scanning, the signal processing unit 7 sets a target value $\psi_0$ for optical axis shift azimuth correction (step ST1). The signal processing unit 7 sets a beam scanning angular velocity co (step ST2). Further, the signal processing unit 7 sets a wind speed measurement distance L for which an optical axis angular shift generated between transmission light and reception light in association with beam scanning is to be corrected (step ST3).

Subsequently, the signal processing unit 7 calculates the elevation angle θ of the optical axis shift from the following equation (1) using the beam scanning angular velocity ω and the wind speed measurement distance L for which the optical axis angular shift generated between the transmission light and the reception light in association with beam scanning is to be corrected (step ST4). In the following equation (1), c denotes the speed of light.

$$\theta = 2\omega L/c \quad (1)$$

The signal processing unit 7 outputs the target value $\psi_0$ for optical axis shift azimuth correction to the azimuth correction unit 13 and the elevation angle correction unit 14, and outputs an elevation angle θ of the optical axis shift to the elevation angle correction unit 14. Further, the signal processing unit 7 outputs beam scanning control information that specifies a beam scanning angular velocity ω and a beam scanning method to the beam scanning optical system controlling unit 11.

The elevation angle correction unit 14 calculates the rotation angle Φ2 of the wedge prism 20a and the rotation angle Φ3 of the wedge prism 20b according to the following equations (2) to (5) using the elevation angle θ of the optical axis shift (step ST5). In the following equations (2), (3) and (4), it is assumed that the wedge prism 20a and the wedge prism 20b have the same refractive index. The variable δ represents an angle at which a light beam incident on one wedge prism is refracted, and is obtained from the following equation (5) using the refractive index n of the wedge prism 20a and the wedge prism 20b and the inclination angle α of the wedge prism 20a and the wedge prism 20b.

$$\Phi_2 = \Phi_3 + \sigma \quad (2)$$

$$\Phi_3 = \tan^{-1}\{(\tan\psi_0(\cos\sigma + 1) - \sin\sigma)/(\cos\sigma + 1 + \sin\sigma\tan\psi_0)\} \quad (3)$$

$$\sigma = \cos^{-1}\{(\theta^2 - 2\delta^2)/2\delta^2\} \quad (4)$$

$$\delta = (n - 1)\alpha \quad (5)$$

The wedge prism rotation controlling unit 21 controls the rotation of the wedge prism 20a and the rotation of the wedge prism 20b on the basis of the rotation angles Φ2 and Φ3 calculated in step ST5 (step ST6). For example, the wedge prism rotation controlling unit 21 controls a relative difference in rotation angle between the wedge prism 20a and the wedge prism 20b so that the elevation angle θ of the optical axis shift of the reception light after passing through the wedge prism 20a and the wedge prism 20b equals 0. The azimuth of the optical axis shift is always fixed to the target value $\psi_0$ by the azimuth correction unit 13.

The elevation angle θ of the optical axis shift is always constant as long as the beam scanning angular velocity co and the wind speed measurement distance L are constant. As described above, the elevation angle component of the optical axis angular shift does not change when the laser beam scanning speed (beam scanning angular velocity co) is constant, and it is not necessary to frequently control the correction amount.

Then, the wind speed measurement is started (step ST7). The transmission light, which is continuous light of a single frequency generated by the light source 1, is distributed by the optical distributor 2 to the pulse modulator 3 and the optical coupler 6. The pulse modulator 3 converts the transmission light input from the optical distributor 2 into pulsed light having a constant repetition period, and further subjects the pulsed light to a frequency shift. The transmission light converted into a pulse by the pulse modulator 3 is output to the transmission side optical system 4.

The transmission side optical system 4 converts the transmission light converted into a pulse by the pulse modulator 3 to have a desired beam diameter and beam divergence angle. The transmission light output from the transmission side optical system 4 passes through the transmission and reception separating unit 8, the return mirror 9, and the azimuth correction unit 13, and then is output to the beam scanning optical system 10.

The beam scanning optical system controlling unit 11 extracts the beam scanning angular velocity co, the rotation angle $\gamma_1(t)$ of the azimuth changing mirror 16, and the rotation angle $\gamma_2(t)$ of the elevation angle changing mirror 17 from the beam scanning control information input from the signal processing unit 7. Then, the beam scanning optical system controlling unit 11 controls the rotation of the azimuth changing mirror 16 about the rotation axis A1 and the rotation of the elevation angle changing mirror 17 about the rotation axis A2 on the basis of the beam scanning angular velocity $\omega$, the rotation angle $\gamma_1(t)$, and the rotation angle $\gamma_2(t)$. Since t is a variable of time, the rotation angle $\gamma_1(t)$ of the azimuth changing mirror 16 and the rotation angle $\gamma_2(t)$ of the elevation angle changing mirror 17 change with time t. The beam scanning optical system 10 starts beam scanning (step ST8).

The beam scanning optical system 10 emits the transmission light into the atmosphere while changing the beam scanning direction. At this point, the beam scanning optical system controlling unit 11 outputs, to the azimuth correction unit 13, the rotation angle $\gamma_1(t)$ and the rotation angle $\gamma_2(t)$ as of the same time as the time when the beam scanning optical system 10 has emitted the transmission light into the atmosphere. The azimuth correction unit 13 acquires the rotation angle $\gamma_1(t)$ and the rotation angle $\gamma_2(t)$ from the beam scanning optical system controlling unit 11 (step ST9).

The transmission light emitted to the atmosphere is scattered by scatterers (for example, aerosol) in the atmosphere. The scattered light is received by the beam scanning optical system 10. The reception light includes a Doppler shift frequency that corresponds to wind speed. The reception light is output from the beam scanning optical system 10 to the azimuth correction unit 13.

As illustrated in FIG. 3, the optical axis of the reception light input to the azimuth correction unit 13 (corresponds to the traveling direction a) is shifted by angle $\theta$ in the azimuth direction with respect to the optical axis A in association with beam scanning. Further, the traveling direction of the reception light changes in association with the beam scanning, that is, the emission direction change of the transmission beam.

For example, when the emission direction of the transmission beam is rotated from 0 to 360 degrees at a constant speed with respect to the azimuth by beam scanning, the optical axis of the reception light also rotates about the optical axis A while the shift amount $\theta$ in the azimuth direction is maintained. In FIG. 3, the azimuth of an optical axis shift of the reception light about the optical axis A is represented using variable $\psi$. The azimuth correction unit 13 corrects the azimuth of the optical axis shift of the reception light depending on the angle $\psi$

so that the azimuth of the optical axis shift of the reception light that has passed through the Dove prism 18 is always constant.

The azimuth after the correction of the azimuth component of the optical axis angular shift by the azimuth correction unit 13 is the target value $\psi_0$ of the optical axis shift azimuth correction set by the signal processing unit 7.

The azimuth correction unit 13 calculates the angle $\psi(t)$ from the following equation (6) using the rotation angle $\gamma_1(t)$ and the rotation angle $\gamma_2(t)$ input from the beam scanning optical system controlling unit 11.

$$\psi(t) = \psi(\gamma_1(t), \gamma_2(t)) \qquad (6)$$

Subsequently, the azimuth correction unit 13 calculates the rotation angle $\Phi_1(t)$ of the Dove prism 18 so that the angle $\psi(t)$ matches the target value $\psi_0$ of the optical axis shift azimuth correction (step ST10).

The azimuth correction unit 13 controls the rotation of the Dove prism 18 on the basis of the rotation angle $\Phi_1(t)$ calculated in step ST10 (step ST11). As a result, the azimuth of the optical axis shift of the reception light is corrected. The reception light whose azimuth of the optical axis shift is fixed to the target value $\psi_0$ by the azimuth correction unit 13 is output to the elevation angle correction unit 14 through the return mirror 9 and the transmission and reception separating unit 8.

As described above, since the azimuth $\psi(t)$ of the optical axis shift of the reception light always changes during the beam scanning, the azimuth correction unit 13 needs to constantly acquire beam scanning control information (emission direction information of the transmission beam) and to correct the azimuth of the optical axis shift. That is, the correction of the azimuth component of the optical axis angular shift is a high-load process in which the correction amount is continuously controlled until the wind speed measurement is completed. Therefore, the azimuth correction unit 13 is more prone to a failure than the elevation angle correction unit 14 is, and requires regular maintenance and inspection.

Subsequently, as described above, the elevation angle correction unit 14 calculates the rotation angle $\Phi_2$ of the wedge prism 20a and the rotation angle $\Phi_3$ of the wedge prism 20b on the basis of the optical axis shift elevation angle information input from the signal processing unit 7. The elevation angle correction unit 14 controls the rotation of the wedge prism 20a and the wedge prism 20b on the basis of the rotation angle $\Phi_2$ and the rotation angle $\Phi_3$. As a result, the elevation angle of the optical axis shift of the reception light is corrected. The reception light whose elevation angle of the optical axis has been corrected by the elevation angle correction unit 14 is output to the reception side optical system 5.

The reception side optical system 5 converts the reception light to have a certain beam diameter and beam divergence angle and outputs the converted reception light to the optical coupler 6. The optical coupler 6 outputs, to the signal processing unit 7, a signal obtained by combining the transmission light input from the optical distributor 2 and the reception light input from the reception side optical system 5.

The signal processing unit 7 extracts the reception light from the combined signal input from the optical coupler 6 and performs heterodyne detection thereof to derive the Doppler shift of the frequency of the reception light. Then, the signal processing unit 7 calculates the wind speed at the wind speed measurement distance in the emission direction of the transmission light on the basis of the beam scanning control information and the Doppler-shifted frequency of the reception light. Then, the signal processing unit 7 confirms whether or not the wind speed measurement is completed (step ST12). At this point, if the wind speed measurement is not completed (step ST12: NO), the process returns to step ST9. As a result, the laser radar device according to the first embodiment continuously measures the wind speed while changing the emission direction of the transmission light. On the other hand, if the wind speed measurement is completed (step ST12: YES), the series of processes in FIG. 5 is terminated.

In the laser radar device according to the first embodiment, the optical axis correction unit 12 includes the azimuth correction unit 13 and the elevation angle correction unit 14, and the azimuth correction unit 13 is disposed to be apart from the elevation angle correction unit 14. As a result, it is possible to perform maintenance and inspection on correction of the azimuth component of an optical axis angular shift, which has a high load and requires regular maintenance and inspection, and correction of the elevation angle component of the optical axis angular shift, which has a relatively low load and does not require more frequent maintenance and inspection than the correction of the azimuth component, independently of each other.

The device body 15 houses the light source 1, the optical distributor 2, the pulse modulator 3, the transmission side optical system 4, the reception side optical system 5, the optical coupler 6, and the signal processing unit 7 as illustrated in FIG. 1, in addition to the elevation angle correction unit 14. This means that a large number of parts for implementing these components are densely arranged inside the device body 15. Therefore, in a case where the azimuth correction unit 13 is housed in the device body 15, a failure that occurs in the azimuth correction unit 13 is expected to adversely affect other components housed in the device body 15. Moreover, if the parts are densely arranged, it is difficult to adjust the optical axis in the maintenance and inspection of the azimuth correction unit 13.

Therefore, in the laser radar device according to the first embodiment, the azimuth correction unit 13 is disposed outside the device body 15, and the elevation angle correction unit 14 is disposed inside the device body 15.

Since the azimuth correction unit 13 that has a high load and requires regular maintenance and inspection is disposed outside the device body 15, it is possible to reduce the influence of a failure occurring in the azimuth correction unit 13 on other components housed in the device body 15. Furthermore, it is expected that the outside of the device body 15 has wider arrangement intervals of components and extra space than the inside of the device body 15. As a result, the optical axis can be easily adjusted for maintenance and inspection of the azimuth correction unit 13.

Note that although FIG. 1 illustrates the azimuth correction unit 13 disposed between the return mirror 9 and the beam scanning optical system 10, the azimuth correction unit 13 may be disposed between the transmission and reception separating unit 8 and the return mirror 9.

The elevation angle correction unit 14 may be implemented by a reflection optical system using a mirror instead of the wedge prisms. Furthermore, although the elevation angle correction unit 14 disposed between the reception side optical system 5 and the transmission and reception separating unit 8 is illustrated in FIG. 1, the elevation angle correction unit 14 may be disposed between the transmission side optical system 4 and the transmission and reception separating unit 8.

The wedge prism 20a and the wedge prism 20b included in the elevation angle correction unit 14 may be made of materials having different refractive indexes.

The return mirror 9 may include multiple mirrors.

The signal processing unit 7 may change the wind speed measurement distance L for which the optical axis shift between the transmission light and the reception light is to be corrected during the beam scanning. In this case, since the optical axis shift elevation angle $\theta$ changes according to the above equation (1), the elevation angle correction unit 14 changes the relative difference in rotation angle between the wedge prism 20a and the wedge prism 20b depending on the change in the wind speed measurement distance L.

Second Embodiment

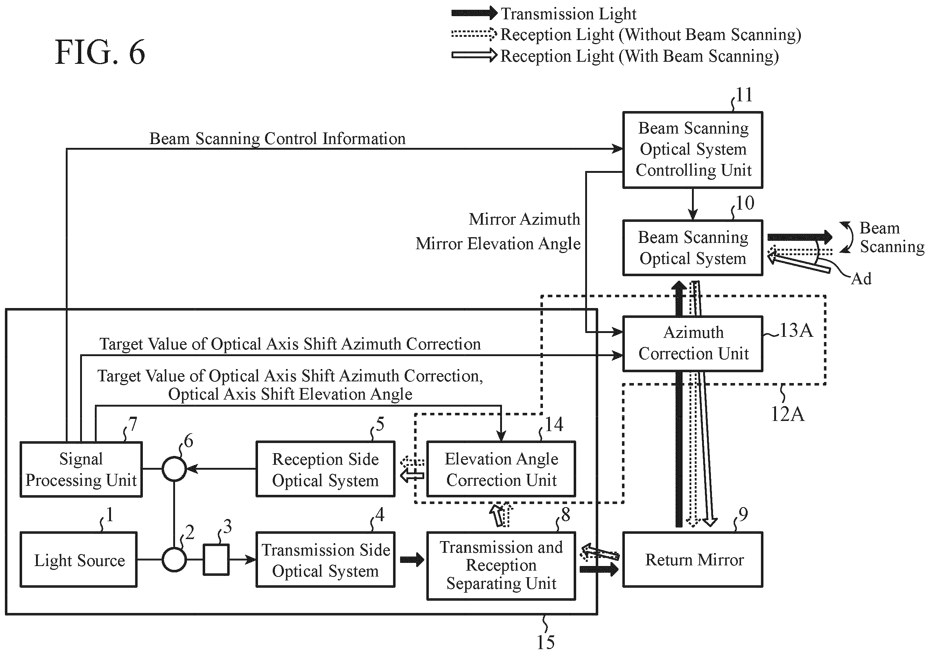

FIG. 6 is a block diagram illustrating a configuration of a laser radar device according to the second embodiment of the invention. In FIG. 6, the same component as that in FIG. 1 is denoted by the same symbol and description thereof is omitted.

The laser radar device illustrated in FIG. 6 emits transmission light that is laser pulse light into the atmosphere, receives scattered light, which is transmission light scattered by aerosol, as reception light, and measures wind speed in a laser emission direction. The direction of wind speed measurement is changed by switching the laser emission direction.

As illustrated in FIG. 6, the laser radar device includes a light source 1, an optical distributor 2, a pulse modulator 3, a transmission side optical system 4, a reception side optical system 5, an optical coupler 6, a signal processing unit 7, a transmission and reception separating unit 8, a return mirror 9, a beam scanning optical system 10, a beam scanning optical system controlling unit 11, and an optical axis correction unit 12A. The optical axis correction unit 12A includes an azimuth correction unit 13A and an elevation angle correction unit 14. The optical axis correction unit 12A corrects an optical axis angular shift Ad generated between transmission light and reception light in association with beam scanning. A device body 15 houses the light source 1, the optical distributor 2, the pulse modulator 3, the transmission side optical system 4, the reception side optical system 5, the optical coupler 6, the signal processing unit 7, the transmission and reception separating unit 8, and the elevation angle correction unit 14.

The azimuth correction unit 13A is disposed separately from the elevation angle correction unit 14 as illustrated in FIG. 6.

For example, the azimuth correction unit 13A is disposed outside the device body 15, and the elevation angle correction unit 14 is disposed inside the device body 15. The azimuth correction unit 13A is a first correction unit that corrects the azimuth component of an optical axis angular shift, and is disposed between the return mirror 9 and the beam scanning optical system 10 and on the optical axis of transmission light. Meanwhile, the azimuth correction unit 13A outputs the transmission light input from the return mirror 9 to the beam scanning optical system 10 and corrects the azimuth component of the optical axis angular shift in reception light input from the beam scanning optical system 10, and then outputs the corrected reception light to the return mirror 9.

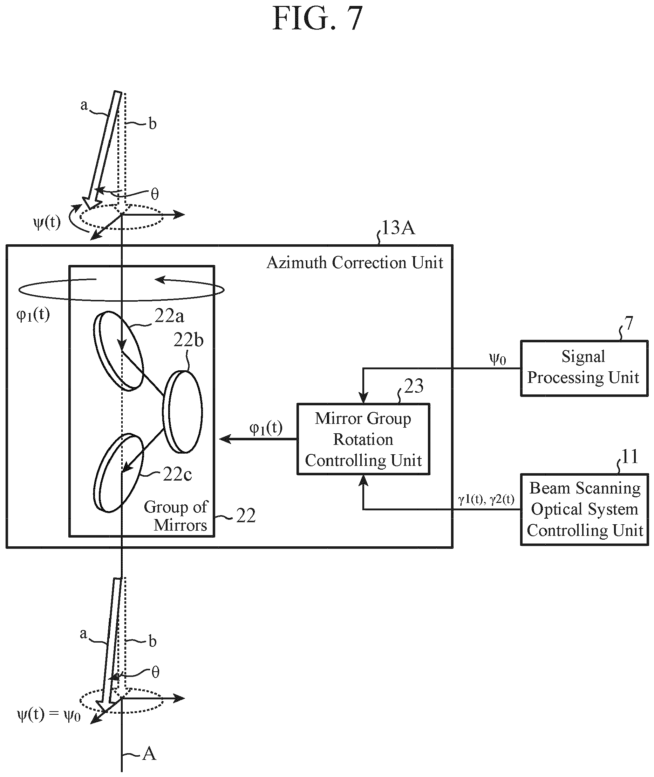

FIG. 7 is a diagram illustrating a configuration of the azimuth correction unit 13A in the second embodiment. As illustrated in FIG. 7, the azimuth correction unit 13A includes a group of mirrors 22 and a mirror group rotation controlling unit 23. The group of mirrors 22 includes a mirror 22a, a mirror 22b, and a mirror 22c, and has the function of correcting the azimuth of an optical axis shift generated between the transmission light and the reception light in association with beam scanning. The signal processing unit 7 and the beam scanning optical system controlling unit 11 are connected to the mirror group rotation controlling unit 23.

The group of mirrors 22 is disposed at a position where a straight line passing through the centers of the mirrors 22a and 22c coincides with the optical axis of transmission light input from the return mirror 9 to the azimuth correction unit 13A while the beam scanning is halted. Furthermore, the mirrors 22a, 22b, and 22c are arranged at positions where the optical axis of the transmission light input from the return mirror 9 to the azimuth correction unit 13A coincides with the optical axis of transmission light emitted from the mirror 22a to the mirror 22c while the beam scanning is halted.

The mirror group rotation controlling unit 23 receives input of the target value $\psi_0$ of optical axis shift azimuth correction from the signal processing unit 7, and input of the rotation angle (mirror azimuth) of the azimuth changing mirror 16 and the rotation angle (mirror elevation angle) of the elevation angle changing mirror 17 from the beam scanning optical system controlling unit 11. The mirror azimuth corresponds to the rotation angle $\gamma_1(t)$, and the mirror elevation angle corresponds to the rotation angle $\gamma_2(t)$.

The mirror group rotation controlling unit 23 calculates the rotation angle $\Phi_1(t)$ of the group of mirrors 22 on the basis of the target value $\psi_0$, the rotation angle $\gamma_1(t)$, and the rotation angle $\gamma_2(t)$ so that the azimuth of the optical axis shift of the reception light after passing through the group of mirrors 22 coincides with the target value $\psi_0$. Then, the mirror group rotation controlling unit 23 controls the rotation of the group of mirrors 22 on the basis of the calculated rotation angle $\Phi_1(t)$.

Note that t is a variable of time. The emission direction of the transmission light (the scanning direction of the laser beam) is uniquely determined by $\gamma_1(t)$ and $\gamma_2(t)$.

Next, the operation will be described.

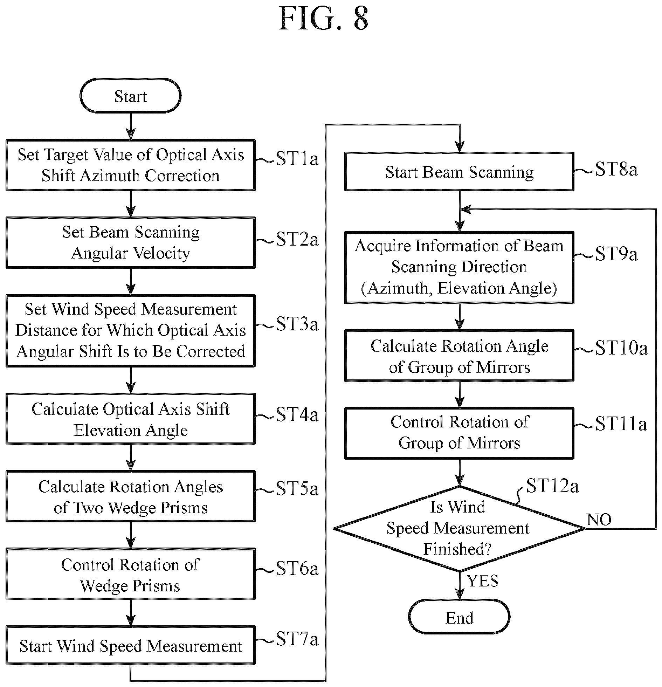

FIG. 8 is a flowchart illustrating the operation of the laser radar device according to the second embodiment.

Note that the processes of steps ST1a to ST8a and step ST12a in FIG. 8 are the same as the processes of steps ST1 to ST8 and step ST12 of FIG. 5, and thus description thereof is omitted.

When the beam scanning optical system 10 starts beam scanning, the beam scanning optical system controlling unit 11 outputs, to the azimuth correction unit 13A, the rotation angle $\gamma_1(t)$ and the rotation angle $\gamma_2(t)$ as of the same time as the time when the transmission light has been emitted. The azimuth correction unit 13A acquires the rotation angle $\gamma_1(t)$ and the rotation angle $\gamma_2(t)$ from the beam scanning optical system controlling unit 11 (step ST9a).

The transmission light emitted to the atmosphere is scattered by scatterers (for example, aerosol) in the atmosphere. The scattered light is received by the beam scanning optical system 10. The reception light includes a Doppler shift frequency that corresponds to wind speed. The reception light is output from the beam scanning optical system 10 to the azimuth correction unit 13A.

As illustrated in FIG. 7, the optical axis of the reception light input to the azimuth correction unit 13A (corresponds to the traveling direction a) is shifted by angle θ in the azimuth direction with respect to the optical axis A in association with beam scanning.

The traveling direction of the reception light changes further as the beam scanning, that is, the emission direction of the transmission beam changes. For example, when the emission direction of the transmission beam is rotated at a constant speed from 0 to 360 degrees with respect to the azimuth by beam scanning, the optical axis of the reception light also rotates about the optical axis A while the shift amount θ in the azimuth direction is maintained. In FIG. 7, the azimuth of an optical axis shift of the reception light about the optical axis A is represented by using variable $\psi$. The azimuth correction unit 13A corrects the azimuth of an optical axis shift of reception light dependent on the angle $\psi$ so that the azimuth of the optical axis shift of reception light that has passed through the group of mirrors 22 is always constant.

The azimuth after the correction of the azimuth component of the optical axis angular shift by the azimuth correction unit 13A is the target value $\psi_0$ of the optical axis shift azimuth correction set by the signal processing unit 7.

The azimuth correction unit 13A calculates the angle $\psi(t)$ from the above equation (6) using the rotation angle $\gamma_1(t)$ and the rotation angle $\gamma_2(t)$ input from the beam scanning optical system controlling unit 11.

Subsequently, the azimuth correction unit 13A calculates the rotation angle $\Phi_1(t)$ of the group of mirrors 22 so that the angle $\psi(t)$ matches the target value $\psi_0$ of the optical axis shift azimuth correction (step ST10a).

The azimuth correction unit 13A controls the rotation of the group of mirrors 22 on the basis of the rotation angle $\Phi_1(t)$ calculated in step ST10a (step ST11a). As a result, the azimuth of the optical axis shift of the reception light is corrected. Thereafter, the reception light whose azimuth of the optical axis shift is fixed to the target value $\psi_0$ by the azimuth correction unit 13A is output to the elevation angle correction unit 14 through the return mirror 9 and the transmission and reception separating unit 8. The elevation angle correction unit 14 corrects the elevation angle component of an optical axis angular shift for the reception light whose azimuth of the optical axis shift is fixed to the target value $\psi_0$ in a procedure similar to that of the first embodiment.

Since the azimuth $\psi(t)$ of the optical axis shift of the reception light always changes during the beam scanning, the azimuth correction unit 13A needs to constantly acquire beam scanning control information (emission direction information of the transmission beam) and to correct the azimuth of the optical axis shift. That is, the correction of the azimuth component of the optical axis angular shift is a high-load process in which the correction amount is continuously controlled until the wind speed measurement is completed. Therefore, the azimuth correction unit 13A is more prone to a failure than the elevation angle correction unit 14 is, and requires regular maintenance and inspection.

In the laser radar device according to the second embodiment, the optical axis correction unit 12A includes the azimuth correction unit 13A and the elevation angle correction unit 14, and the azimuth correction unit 13A is disposed separately from the elevation angle correction unit 14. As a result, it is possible to perform maintenance and inspection on correction of the azimuth component of an optical axis angular shift, which has a high load and requires regular maintenance and inspection, and correction of the elevation angle component of the optical axis angular shift, which has a relatively low load and does not require more frequent maintenance and inspection than the correction of the azimuth component, independently of each other.

The device body 15 houses the light source 1, the optical distributor 2, the pulse modulator 3, the transmission side optical system 4, the reception side optical system 5, the optical coupler 6, and the signal processing unit 7 as illustrated in FIG. 6, in addition to the elevation angle correction unit 14. This means that a large number of parts for implementing these components are densely arranged inside the device body 15. Therefore, in a case where the azimuth correction unit 13A is housed in the device body 15, a failure that occurs in the azimuth correction unit 13A is expected to adversely affect other components housed in the device body 15. Moreover, if the parts are densely arranged, it is difficult to adjust the optical axis in the maintenance and inspection of the azimuth correction unit 13A.

Therefore, in the laser radar device according to the second embodiment, the azimuth correction unit 13A is disposed outside the device body 15, and the elevation angle correction unit 14 is disposed inside the device body 15.

Since the azimuth correction unit 13A that has a high load and requires regular maintenance and inspection is disposed outside the device body 15, it is possible to reduce the influence of a failure occurring in the azimuth correction unit 13A on other components housed in the device body 15. Furthermore, it is expected that the outside of the device body 15 has wider arrangement intervals of components and extra space than the inside of the device body 15. As a result, the optical axis can be easily adjusted for maintenance and inspection of the azimuth correction unit 13A.

In the laser radar device according to the second embodiment, the azimuth correction unit 13A includes the group of mirrors 22 including the mirrors 22a, 22b, and 22c that guides the incident laser light to the emission side while reflecting the laser light, and corrects the azimuth component of the optical axis angular shift by controlling the rotation of the group of mirrors 22. Also with this configuration, it is possible to correct the azimuth of the optical axis shift generated between the transmission light and the reception light in association with beam scanning. Furthermore, the group of mirrors 22 can be used even in a case where the beam diameter of transmission light or reception light is wider than that of the Dove prism 18.

Note that although the azimuth correction unit 13A disposed between the return mirror 9 and the beam scanning optical system 10 is illustrated in FIG. 6, the azimuth correction unit 13A may be disposed between the transmission and reception separating unit 8 and the return mirror 9.

Like in the first embodiment, the elevation angle correction unit 14 in the second embodiment may be implemented by a reflection optical system using a mirror instead of the wedge prisms. Furthermore, although the elevation angle correction unit 14 disposed between the reception side optical system 5 and the transmission and reception separating unit 8 is illustrated in FIG. 6, the elevation angle correction unit 14 may be disposed between the transmission side optical system 4 and the transmission and reception separating unit 8.

Like in the first embodiment, the wedge prism 20a and the wedge prism 20b included in the elevation angle correction unit 14 in the second embodiment may be made of materials having different refractive indexes.

The return mirror 9 may include multiple mirrors.

Like in the first embodiment, the signal processing unit 7 in the second embodiment may change the wind speed measurement distance L for which the optical axis shift between the transmission light and the reception light is to be corrected during the beam scanning. In this case, since the optical axis shift elevation angle θ changes according to the above equation (1), the elevation angle correction unit 14 changes the relative difference in rotation angle between the wedge prism 20a and the wedge prism 20b depending on the change in the wind speed measurement distance L.

Third Embodiment

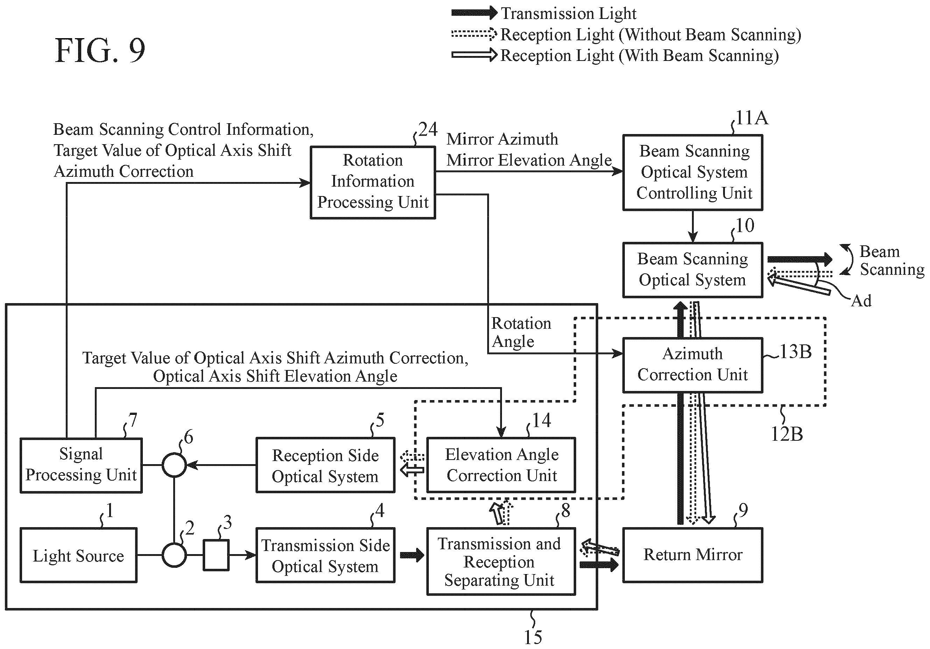

FIG. 9 is a block diagram illustrating a configuration of a laser radar device according to the third embodiment of the invention. In FIG. 9, the same component as that in FIG. 1 is denoted by the same symbol, and description thereof is omitted.

The laser radar device illustrated in FIG. 9 emits transmission light that is laser pulse light into the atmosphere, receives scattered light, which is transmission light scattered by aerosol, as reception light, and measures wind speed in a laser emission direction. The direction of wind speed measurement is changed by switching the laser emission direction.

As illustrated in FIG. 9, the laser radar device includes a light source 1, an optical distributor 2, a pulse modulator 3, a transmission side optical system 4, a reception side optical system 5, an optical coupler 6, a signal processing unit 7, a transmission and reception separating unit 8, a return mirror 9, a beam scanning optical system 10, a beam scanning optical system controlling unit 11A, an optical axis correction unit 12B, and a rotation information processing unit 24. The optical axis correction unit 12B includes an azimuth correction unit 13B and an elevation angle correction unit 14. A device body 15 houses the light source 1, the optical distributor 2, the pulse modulator 3, the transmission side optical system 4, the reception side optical system 5, the optical coupler 6, the signal processing unit 7, the transmission and reception separating unit 8, and the elevation angle correction unit 14.

The beam scanning optical system controlling unit 11A controls beam scanning by the beam scanning optical system 10 on the basis of the mirror azimuth and the mirror elevation angle input from the rotation information processing unit 24.

Note that the mirror azimuth is a beam scanning azimuth, and corresponds to the rotation angle $\gamma_1(t)$ of the azimuth changing mirror 16 included in the beam scanning optical system 10. The mirror elevation angle is a beam scanning elevation angle, and corresponds to the rotation angle $\gamma_2(t)$ of the elevation angle changing mirror 17.

Note that the beam scanning unit in the third embodiment is implemented by the beam scanning optical system 10 and the beam scanning optical system controlling unit 11A.

As illustrated in FIG. 9, the azimuth correction unit 13B is disposed separately from the elevation angle correction unit 14.

For example, the azimuth correction unit 13B is disposed outside the device body 15, and the elevation angle correction unit 14 is disposed inside the device body 15. The azimuth correction unit 13B is a first correction unit that corrects the azimuth component of an optical axis angular shift, and is disposed between the return mirror 9 and the beam scanning optical system 10 and on the optical axis of transmission light. Meanwhile, the azimuth correction unit 13B outputs the transmission light input from the return mirror 9 to the beam scanning optical system 10 and corrects the azimuth component of the optical axis angular shift in reception light input from the beam scanning optical system 10, and then outputs the corrected reception light to the return mirror 9.

The rotation information processing unit 24 calculates the mirror azimuth and the mirror elevation angle on the basis of the beam scanning control information and the target value of the optical axis shift azimuth correction input from the signal processing unit 7, and calculates a rotation angle to be set in the azimuth correction unit 13B. Note that the mirror azimuth corresponds to the rotation angle yi(t) of the azimuth changing mirror 16. The mirror elevation angle corresponds to the rotation angle $\gamma_2(t)$ of the elevation angle changing mirror 17. The mirror azimuth and the mirror elevation angle calculated by the rotation information processing unit 24 are output to the beam scanning optical system controlling unit 11A.

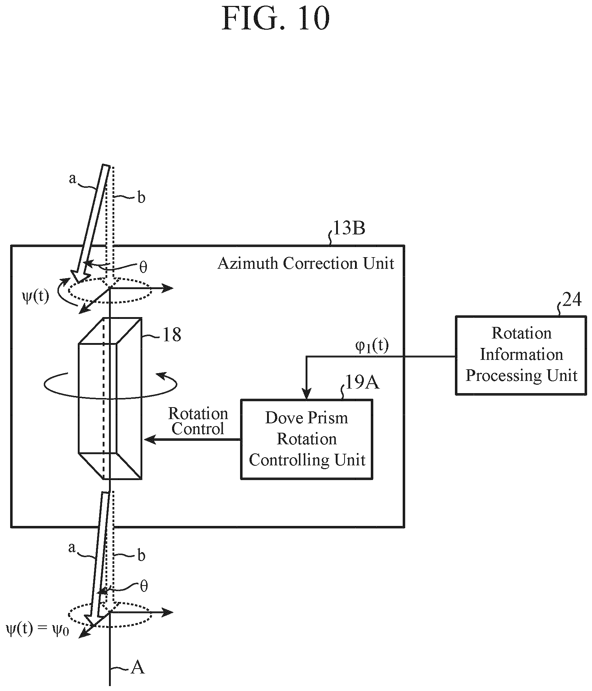

FIG. 10 is a diagram illustrating a configuration of the azimuth correction unit 13B in the third embodiment. As illustrated in FIG. 10, the azimuth correction unit 13B includes a Dove prism 18 and a Dove prism rotation controlling unit 19A. The Dove prism 18 is disposed so that the optical axis A of the Dove prism 18 coincides with the traveling direction b of the reception light when beam scanning is halted.

When beam scanning is executed, the traveling direction of the reception light incident on the azimuth correction unit 13B from the return mirror 9 is directed along arrow a illustrated in FIG. 10. Since the optical axis of the transmission light coincides with the traveling direction b of the reception light when beam scanning is halted, the optical axis is shifted in the azimuth direction by a shift amount θ between the transmission light and the reception light when beam scanning is started. The Dove prism 18 corrects the azimuth component of such an optical axis angular shift.

The Dove prism rotation controlling unit 19A is connected to the beam scanning optical system controlling unit 11A and the rotation information processing unit 24, and controls the rotation of the Dove prism 18 about the optical axis A. For example, the Dove prism rotation controlling unit 19A controls the rotation of the Dove prism 18 on the basis of the rotation angle $\Phi_1(t)$ input from the rotation information processing unit 24. Here, $\gamma_1(t)$ denotes the rotation angle of the azimuth changing mirror 16 (mirror azimuth), and $\gamma_2(t)$ denotes the rotation angle of the elevation angle changing mirror 17 (mirror elevation angle). Symbol t is a variable of time. The emission direction of the transmission light is uniquely determined by $\gamma_1(t)$ and $\gamma_2(t)$.

Next, the operation will be described.

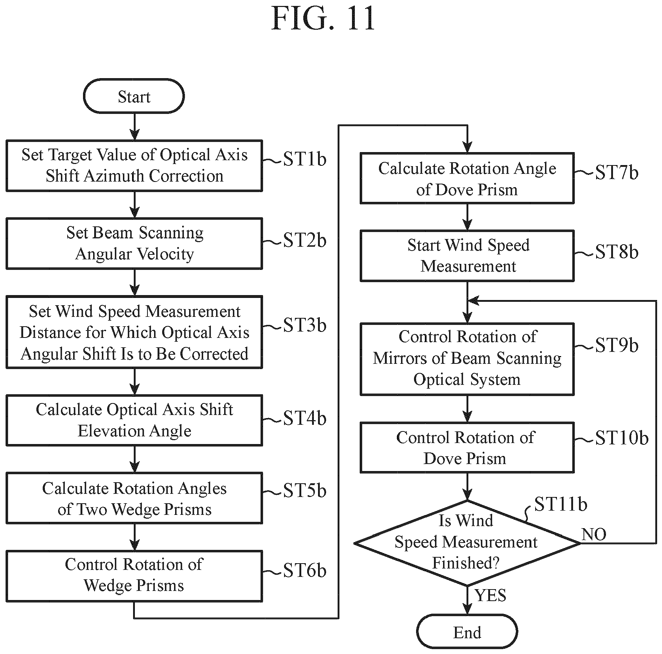

FIG. 11 is a flowchart illustrating the operation of the laser radar device according to the third embodiment.

Note that the processes of steps ST1b to ST6b and step ST11b in FIG. 11 are the same as the processes of steps ST1 to ST6 and step ST12 of FIG. 5, and thus description thereof is omitted.

The signal processing unit 7 outputs the target value $\psi_0$ for optical axis shift azimuth correction to the elevation angle correction unit 14 and the rotation information processing unit 24, and outputs an elevation angle θ of the optical axis shift to the elevation angle correction unit 14. The signal processing unit 7 further outputs beam scanning control information that specifies a beam scanning angular velocity ω and a beam scanning method to the rotation information processing unit 24.

As illustrated in FIG. 10, the optical axis of the reception light input to the azimuth correction unit 13B (corresponds to the traveling direction a) is shifted by angle θ in the azimuth direction with respect to the optical axis A in association with beam scanning. The traveling direction of the reception light changes further as the beam scanning, that is, the emission direction of the transmission beam changes.

For example, when the emission direction of the transmission beam is rotated at a constant speed from 0 to 360 degrees with respect to the azimuth by beam scanning, the optical axis of the reception light also rotates about the optical axis A while the shift amount θ in the azimuth direction is maintained. In FIG. 10, the azimuth of an optical axis shift of the reception light about the optical axis A is represented by using variable $\psi$. The azimuth correction unit 13B corrects the azimuth of the optical axis shift of the reception light depending on the angle $\psi$ so that the azimuth of the optical axis shift of the reception light that has passed through the Dove prism 18 is always constant.

The azimuth after the correction of the azimuth component of the optical axis angular shift by the azimuth correction unit 13B is the target value $\psi_0$ of the optical axis shift azimuth correction. The rotation information processing unit 24 calculates the rotation angle $\gamma_1(t)$ of the azimuth changing mirror 16 and the rotation angle $\gamma_2(t)$ of the elevation angle changing mirror 17 on the basis of the beam scanning control information input from the signal processing unit 7. Then, the rotation information processing unit 24 calculates the angle $\psi(t)$ from the above equation (6) using the calculated rotation angle $\gamma_1(t)$ and rotation angle $\gamma_2(t)$. The rotation information processing unit 24 calculates the rotation angle $\Phi_1(t)$ of the Dove prism 18 so that the angle $\psi(t)$ matches the target value $\psi_0$ of the optical axis shift azimuth correction (step ST7b).

The rotation angle $\Phi_1(t)$ of the Dove prism 18 is output from the rotation information processing unit 24 to the azimuth correction unit 13B.

Then, the wind speed measurement is started (step ST8b). The transmission light, which is continuous light of a single frequency generated by the light source 1, is distributed by the optical distributor 2 to the pulse modulator 3 and the optical coupler 6. The pulse modulator 3 converts the transmission light input from the optical distributor 2 into pulsed light having a constant repetition period, and further subjects the pulsed light to a frequency shift. The transmission light converted into a pulse by the pulse modulator 3 is output to the transmission side optical system 4.

The transmission side optical system 4 converts the transmission light converted into a pulse by the pulse modulator 3 to have a desired beam diameter and beam divergence angle. The transmission light output from the transmission side optical system 4 passes through the transmission and reception separating unit 8, the return mirror 9, and the azimuth correction unit 13B, and then is output to the beam scanning optical system 10.

The beam scanning optical system controlling unit 11A controls the rotation of the azimuth changing mirror 16 about the rotation axis A1 and the rotation of the elevation angle changing mirror 17 about the rotation axis A2 on the basis of the rotation angle $\gamma_1(t)$ of the azimuth changing mirror 16 and the rotation angle $\gamma_2(t)$ of the elevation angle changing mirror 17 input from the rotation information processing unit 24. Since t is a variable of time, the rotation angle $\gamma_1(t)$ of the azimuth changing mirror 16 and the rotation angle $\gamma_2(t)$ of the elevation angle changing mirror 17 change with time t.

As a result, the rotations of the azimuth changing mirror 16 and the elevation angle changing mirror 17 included in the beam scanning optical system 10 are controlled (step ST9b).

The beam scanning optical system 10 emits the transmission light into the atmosphere while changing the beam scanning direction.

The transmission light emitted to the atmosphere is scattered by scatterers (for example, aerosol) in the atmosphere. The scattered light is received by the beam scanning optical system 10. The reception light includes a Doppler shift frequency that corresponds to wind speed. The reception light is output from the beam scanning optical system 10 to the azimuth correction unit 13B.

The Dove prism rotation controlling unit 19A controls the rotation of the Dove prism 18 so that the rotation angle $\Phi_1(t)$ input from the rotation information processing unit 24 is achieved (step ST10b).

As a result, the azimuth of the optical axis shift of the reception light is corrected.

Unlike in the first and second embodiments, the azimuth correction unit 13B does not receive the rotation angle $\gamma_1(t)$ nor the rotation angle $\gamma_2(t)$ from the beam scanning optical system controlling unit 11, but controls the rotation of the Dove prism 18 using the rotation angle $\Phi_1(t)$ input from and the rotation information processing unit 24.

Therefore, the process of transmitting a signal from the beam scanning optical system controlling unit 11 to the azimuth correction unit 13B and calculating the rotation angle $\Phi_1(t)$ by the azimuth correction unit 13B on the basis of this signal is not necessary, thereby reducing the delay time associated with the process.

Since the azimuth $\psi(t)$ of the optical axis shift of the reception light always changes during the beam scanning, the azimuth correction unit 13B needs to constantly acquire beam scanning control information (emission direction information of the transmission beam) and to correct the azimuth of the optical axis shift. That is, the correction of the azimuth component of the optical axis angular shift is a high-load process in which the correction amount is continuously controlled until the wind speed measurement is completed. Therefore, the azimuth correction unit 13B is more prone to a failure than the elevation angle correction unit 14 is, and requires regular maintenance and inspection.

In the laser radar device according to the third embodiment, the optical axis correction unit 12B includes the azimuth correction unit 13B and the elevation angle correction unit 14, and the azimuth correction unit 13B is disposed separately from the elevation angle correction unit 14. As a result, it is possible to perform maintenance and inspection on correction of the azimuth component of an optical axis angular shift, which has a high load and requires regular maintenance and inspection, and correction of the elevation angle component of the optical axis angular shift, which has a relatively low load and does not require more frequent maintenance and inspection than the correction of the azimuth component independently of each other.

The device body 15 houses the light source 1, the optical distributor 2, the pulse modulator 3, the transmission side optical system 4, the reception side optical system 5, the optical coupler 6, and the signal processing unit 7 as illustrated in FIG. 9, in addition to the elevation angle correction unit 14. This means that a large number of parts for implementing these components are densely arranged inside the device body 15. Therefore, in a case where the azimuth correction unit 13B is housed in the device body 15, a failure that occurs in the azimuth correction unit 13B is expected to adversely affect other components housed in the device body 15. Moreover, if the parts are densely arranged, it is difficult to adjust the optical axis in the maintenance and inspection of the azimuth correction unit 13B.

Therefore, in the laser radar device according to the third embodiment, the azimuth correction unit 13B is disposed outside the device body 15, and the elevation angle correction unit 14 is disposed inside the device body 15.

Since the azimuth correction unit 13B that has a high load and requires regular maintenance and inspection is disposed outside the device body 15, it is possible to reduce the influence of a failure occurring in the azimuth correction unit 13B on other components housed in the device body 15. Furthermore, it is expected that the outside of the device body 15 has wider arrangement intervals of components and extra space than the inside of the device body 15. As a result, the optical axis can be easily adjusted for maintenance and inspection of the azimuth correction unit 13B.

The laser radar device according to the third embodiment includes the rotation information processing unit 24. The rotation information processing unit 24 simultaneously controls the beam scanning by the beam scanning optical system 10 and the beam scanning optical system controlling unit 11A and the correction of the azimuth component of an optical axis angular shift by the azimuth correction unit 13B.

With this configuration, signal transmission from the beam scanning optical system controlling unit to the azimuth correction unit and the calculation processes by the beam scanning optical system controlling unit and the azimuth correction unit become unnecessary, thereby reducing the delay time associated with these processes.

Note that although the azimuth correction unit 13B disposed between the return mirror 9 and the beam scanning optical system 10 is illustrated in FIG. 9, the azimuth correction unit 13B may be disposed between the transmission and reception separating unit 8 and the return mirror 9.

Like in the first embodiment, the elevation angle correction unit 14 in the third embodiment may be implemented by a reflection optical system using a mirror instead of the wedge prisms. Furthermore, although the elevation angle correction unit 14 disposed between the reception side optical system 5 and the transmission and reception separating unit 8 is illustrated in FIG. 9, the elevation angle correction unit 14 may be disposed between the transmission side optical system 4 and the transmission and reception separating unit 8.

Like in the first embodiment, the wedge prism 20a and the wedge prism 20b included in the elevation angle correction unit 14 in the third embodiment may be made of materials having different refractive indexes.

The return mirror 9 may include multiple mirrors.

Like in the first embodiment, the signal processing unit 7 in the third embodiment may change the wind speed measurement distance L for which the optical axis shift between the transmission light and the reception light is to be corrected during the beam scanning.

In this case, since the optical axis shift elevation angle θ changes according to the above equation (1), the elevation angle correction unit 14 changes the relative difference in rotation angle between the wedge prism 20a and the wedge prism 20b depending on the change in the wind speed measurement distance L.

## INDUSTRIAL APPLICABILITY

A laser radar device according to the present invention is capable of independently performing maintenance and inspection for correction of the azimuth component of an optical axis angular shift and maintenance and inspection for correction of the elevation angle component of the optical axis angular shift, and thus, for example, the laser radar device can be used in a wind turbine generator that uses wind speed information.

## REFERENCE SIGNS LIST

1: light source, 2: optical distributor, 3: pulse modulator, 4: transmission side optical system, 5: reception side optical system, 6: optical coupler, 7: signal processing unit, 8: transmission and reception separating unit, 9: return mirror, 10: beam scanning optical system, 11, 11A: beam scanning optical system controlling unit, 12, 12A, 12B: optical axis correction unit, 13, 13A, 13B: azimuth correction unit, 14: elevation angle correction unit, 15: device body, 16: azimuth changing mirror, 17: elevation angle changing mirror, 18: Dove prism, 19, 19A: Dove prism rotation controlling unit, 20a, 20b: wedge prism, 21: wedge prism rotation controlling unit, 22: group of mirrors, 22a, 22b, 22c: mirror, 23: mirror group rotation controlling unit, 24: rotation information processing unit.

## Claims

1. A laser radar device comprising:

    a light source (1) generating laser light;
    an optical distributor (2) distributing the laser light from the light source;
    a pulse modulator (3) converting a part of the laser light distributed from the optical distributor into a pulse;
    a transmission side optical system (4) outputting transmission light that is laser light converted into the pulse by the pulse modulator;
    a reception side optical system (5) outputting reception light, which is reflection light of the transmission light that is reflected by an object;
    an optical coupler (6) generating a combined signal by combining the reception light input from the reception side optical system and another part of the laser light distributed from the optical distributor;
    a signal processing unit (7) performing a wind speed measuring process using the combined signal generated by the optical coupler;
    a beam scanning unit (10, 11) scanning with a laser beam; and
    an optical axis correction unit (12, 12A, 12B) correcting an optical axis angular shift generated between the transmission light and the reception light in association with beam scanning by the beam scanning unit,
    **characterized in that** the optical axis correction unit comprises a first correction unit (13, 13A, 13B) correcting an azimuth component of the optical axis angular shift and a second correction unit (14) correcting an elevation angle component of the optical axis angular shift, and
    the first correction unit (13, 13A, 13B) is disposed separately from the second correction unit (14).

2. The laser radar device according to claim 1, further comprising:

    a device body (15) housing the light source (1), the optical distributor (2), the pulse modulator (3), the transmission side optical system (4), the reception side optical system (5), the optical coupler (6), and the signal processing unit (7), wherein the first correction unit (13, 13A, 13B) is disposed outside the device body (15).

3. The laser radar device according to claim 1 or 2,

    wherein the first correction unit (13) corrects the optical axis angular shift on a basis of beam scanning control information including a scanning angle and scanning speed of the laser beam, and
    the beam scanning control information is input from the signal processing unit (7).

4. The laser radar device according to claim 1 or 2,

    wherein
    the first correction unit (13A) comprises a group of mirrors (22) comprising a plurality of mirrors (22a, 22b, 22c) guiding an incident laser beam to an emission side while reflecting the laser beam, and corrects the azimuth component of the optical axis angular shift by controlling rotation of the group of mirrors.

**5.** The laser radar device according to claim 1 or 2, further comprising:
an information processing unit (24) controlling beam scanning by the beam scanning unit (10, 11A) and correction of the azimuth component of the optical axis angular shift by the first correction unit (13B).

**6.** The laser radar device according to claim 3,

wherein the first correction unit (13) comprises a Dove prism (18) through which the laser light passes, and corrects the azimuth component of the optical axis angular shift by controlling rotation of the Dove prism, and
the second correction unit (14) comprises a wedge prism (20a, 20b) through which the laser light passes, and corrects the elevation angle component of the optical axis angular shift by controlling rotation of the wedge prism.

**7.** The laser radar device according to claim 5,

wherein the first correction unit (13B) includes a Dove prism (18) through which the laser light passes, and
the information processing unit (24) controls beam scanning by the beam scanning unit (10, 11A) and rotation of the Dove prism.

**Patentansprüche**

**1.** Laserradareinrichtung, umfassend:

eine Laserlichtquelle (1), die Laserlicht erzeugt;
einen optischen Verteiler (2), der das Laserlicht von der Lichtquelle verteilt;
einen Pulsmodulator (3), der einen Teil des vom optischen Verteiler verteilten Laserlichts in einen Puls umwandelt;
ein übertragungsseitiges optisches System (4), das Übertragungslicht ausgibt, bei dem es sich um Laserlicht handelt, das durch den Pulsmodulator in den Puls umgewandelt wurde;
ein empfangsseitiges optisches System (5), das Empfangslicht ausgibt, das Reflexionslicht des Übertragungslichts ist, das von einem Objekt reflektiert wird;
einen optischen Koppler (6), der ein kombiniertes Signal erzeugt, indem er das vom empfangsseitigen optischen System eingegebene Empfangslicht und einen anderen Teil des vom optischen Verteiler verteilten Laserlichts kombiniert;
eine Signalverarbeitungseinheit (7), die unter Verwendung des vom optischen Koppler erzeugten kombinierten Signals einen Windgeschwindigkeitsmessvorgang durchführt;

eine Strahlabtastungseinheit (10, 11), die mit einem Laserstrahl abtastet; und
eine Optische-Achse-Korrektureinheit (12, 12A, 12B), die eine Winkelverschiebung der optischen Achse korrigiert, die zwischen dem Übertragungslicht und dem Empfangslicht in Verbindung mit einer Strahlabtastung durch die Strahlabtastungseinheit erzeugt wird,
**dadurch gekennzeichnet, dass** die Optische-Achse-Korrektureinheit eine erste Korrektureinheit (13, 13A, 13B), die eine Azimutkomponente der Winkelverschiebung der optischen Achse korrigiert, und eine zweite Korrektureinheit (14), die eine Elevationswinkelkomponente der Winkelverschiebung der optischen Achse korrigiert, umfasst, und
die erste Korrektureinheit (13, 13A, 13B) von der zweiten Korrektureinheit (14) getrennt angeordnet ist.

**2.** Laserradareinrichtung nach Anspruch 1, ferner umfassend:

einen Einrichtungskörper (15), in dem die Lichtquelle (1), der optische Verteiler (2), der Pulsmodulator (3), das übertragungsseitige optische System (4), das empfangsseitige optische System (5), der optische Koppler (6) und die Signalverarbeitungseinheit (7) untergebracht sind,
wobei die erste Korrektureinheit (13, 13A, 13B) außerhalb des Einrichtungskörpers (15) angeordnet ist.

**3.** Laserradareinrichtung nach Anspruch 1 oder 2,

wobei die erste Korrektureinheit (13) die Winkelverschiebung der optischen Achse auf Grundlage von Strahlabtastungssteuerungsinformationen, die einen Abtastungswinkel und eine Abtastungsgeschwindigkeit des Laserstrahls aufweisen, korrigiert, und
die Strahlabtastungssteuerungsinformationen von der Signalverarbeitungseinheit (7) eingegeben werden.

**4.** Laserradareinrichtung nach Anspruch 1 oder 2,

wobei
die erste Korrektureinheit (13 A) eine Gruppe von Spiegeln (22) umfasst, die eine Vielzahl von Spiegeln (22a, 22b, 22c) umfasst, die einen einfallenden Laserstrahl zu einer Emissionsseite leiten, während sie den Laserstrahl reflektieren, und die Azimutkomponente der Winkelverschiebung der optischen Achse durch Steuern der Drehung der Gruppe von Spiegeln korrigiert.

**5.** Laserradareinrichtung nach Anspruch 1 oder 2, ferner umfassend:
eine Informationsverarbeitungseinheit (24), die Strahlabtastung durch die Strahlabtastungseinheit (10, 11 A) und Korrektur der Azimutkomponente der Winkelverschiebung der optischen Achse durch die erste Korrektureinheit (13B) steuert.

6. Laserradareinrichtung nach Anspruch 3,

wobei die erste Korrektureinheit (13) ein Dove-Prisma (18) umfasst, durch das das Laserlicht hindurchgeht, und die Azimutkomponente der Winkelverschiebung der optischen Achse durch Steuerung der Drehung des Dove-Prismas korrigiert, und

die zweite Korrektureinheit (14) ein Keilprisma (20a, 20b) umfasst, durch das das Laserlicht hindurchgeht, und die Elevationswinkelkomponente der Winkelverschiebung der optischen Achse durch Steuerung der Drehung des Keilprismas korrigiert.

7. Laserradareinrichtung nach Anspruch 5,

wobei die erste Korrektureinheit (13B) ein Dove-Prisma (18) umfasst, durch das das Laserlicht hindurchgeht, und

die Informationsverarbeitungseinheit (24) Strahlabtastung durch die Strahlabtastungseinheit (10, 11A) und Drehung des Dove-Prismas steuert.

**Revendications**

1. Dispositif radar laser comprenant :

une source de lumière (1), qui génère une lumière laser;

un répartiteur optique (2), qui répartit la lumière laser en provenance de la source de lumière ;

un modulateur d'impulsions (3), qui convertit en impulsions, une partie de la lumière laser répartie en provenance du répartiteur optique ;

un système optique du côté émission (4), qui délivre en sortie une lumière d'émission qui est la lumière laser convertie en impulsions par le modulateur d'impulsions ;

un système optique du côté réception (5), qui délivre en sortie une lumière de réception, qui est la lumière de réflexion de la lumière d'émission qui est réfléchie par un objet ;

un coupleur optique (6), qui génère un signal combiné, en combinant la lumière de réception entrée en provenance du système optique du côté réception, et une autre partie de la lumière laser répartie par le répartiteur optique ;

une unité de traitement du signal (7), qui exécute un processus de mesure de la vitesse du vent en utilisant le signal combiné généré par le coupleur optique ;

une unité de balayage de faisceau (10, 11), qui balaie avec un faisceau laser ; et

une unité de correction d'axe optique (12, 12A, 12B), qui corrige un décalage angulaire d'axe optique généré entre la lumière d'émission et la lumière de réception, en association avec le balayage du faisceau par l'unité de balayage de faisceau,

**caractérisé en ce que** l'unité de correction d'axe optique comprend une première unité de correction (13, 13A, 13B), qui corrige une composante d'azimut du décalage angulaire d'axe optique, et une seconde unité de correction (14), qui corrige une composante d'angle d'élévation du décalage angulaire d'axe optique, et la première unité de correction (13, 13A, 13B) est disposée séparément de la seconde unité de correction (14).

2. Dispositif radar laser selon la revendication 1, comprenant en outre :

un corps de dispositif (15), qui loge la source de lumière (1), le répartiteur optique (2), le modulateur d'impulsions (3), le système optique du côté émission (4), le système optique du côté réception (5), le coupleur optique (6), et l'unité de traitement du signal (7),

dans lequel la première unité de correction (13, 13A, 13B) est disposée à l'extérieur du corps de dispositif (15).

3. Dispositif radar laser selon la revendication 1 ou 2, dans lequel

la première unité de correction (13) corrige le décalage angulaire d'axe optique sur la base d'informations de commande de balayage du faisceau, qui comprennent un angle de balayage et une vitesse de balayage du faisceau laser, et

les informations de commande de balayage du faisceau sont entrées à partir de l'unité de traitement du signal (7).

4. Dispositif radar laser selon la revendication 1 ou 2,

dans lequel
la première unité de correction (13A) comprend un groupe de miroirs (22) qui comprend une pluralité de miroirs (22a, 22b, 22c) qui guident un faisceau laser incident vers un côté émission, tout en réfléchissant le faisceau laser, et corrige la composante d'azimut du décalage angulaire d'axe optique, en commandant la rotation du groupe de miroirs.

5. Dispositif radar laser selon la revendication 1 ou 2, comprenant en outre :
une unité de traitement d'informations (24), qui commande le balayage du faisceau avec l'unité de balayage de faisceau (10, 11A), et la correction de la composante d'azimut du décalage angulaire d'axe optique, avec la première unité de correction (13B).

6. Dispositif radar laser selon la revendication 3, dans lequel

la première unité de correction (13) comprend un prisme de Dove (18) à travers lequel passe la lumière laser, et corrige la composante d'azimut du décalage angulaire d'axe optique, en commandant la rotation du prisme de Dove, et la seconde unité de correction (14) comprend un prisme en coin (20a, 20b) à travers lequel passe la lumière laser, et corrige l'angle d'élévation du décalage angulaire d'axe optique, en commandant la rotation du prisme en coin.

7. Dispositif radar laser selon la revendication 5, dans lequel

la première unité de correction (13B) comprend un prisme de Dove (18) à travers lequel passe la lumière laser, et
l'unité de traitement des informations (24) commande le balayage du faisceau par l'unité de balayage de faisceau (10, 11A), et la rotation du prisme de Dove.

# FIG. 1

Transmission Light
Reception Light (Without Beam Scanning)
Reception Light (With Beam Scanning)

Beam Scanning Control Information

**Beam Scanning Optical System Controlling Unit** (11)

**Beam Scanning Optical System** (10)

Beam Scanning

Ad

Mirror Azimuth
Mirror Elevation Angle

**Azimuth Correction Unit** (13)

(12)

Target Value of Optical Axis Shift Azimuth Correction

Target Value of Optical Axis Shift Azimuth Correction, Optical Axis Shift Elevation Angle

**Signal Processing Unit** (7)

(6)

**Reception Side Optical System** (5)

**Elevation Angle Correction Unit** (14)

**Light Source** (1)

(2) (3)

**Transmission Side Optical System** (4)

**Transmission and Reception Separating Unit** (8)

**Return Mirror** (9)

(15)

EP 3 789 786 B1

# FIG. 2

➡️ Transmission Light
┄┄┄┄┄▷ Reception Light (Without Beam Scanning)

Beam Scanning
Optical System
Controlling Unit

Emission Direction
of Transmission Light

Rotation Axis A1

Rotation
Axis A2

Optical
Axis

16

17

Beam Scanning Optical System

10

# FIG. 3

a
b

Azimuth Correction Unit

13

θ

ψ(t)

18

φ₁(t)

7

ψ₀

Signal
Processing Unit

19

φ₁(t)

Dove Prism
Rotation
Controlling Unit

γ1(t), γ2(t)

11

Beam Scanning
Optical System
Controlling Unit

a
b

θ

ψ(t) = ψ₀

A

# FIG. 4

# FIG. 5

```
        ┌──────────┐
        │  Start   │
        └──────────┘
             │
             ▼
┌──────────────────────────┐
│ Set Target Value of Optical Axis │ ～ST1
│  Shift Azimuth Correction │
└──────────────────────────┘
             │
             ▼
┌──────────────────────────┐
│    Set Beam Scanning     │ ～ST2
│     Angular Velocity     │
└──────────────────────────┘
             │
             ▼
┌──────────────────────────┐
│ Set Wind Speed Measurement │ ～ST3
│ Distance for Which Optical Axis │
│ Angular Shift Is to Be Corrected │
└──────────────────────────┘
             │
             ▼
┌──────────────────────────┐
│  Calculate Optical Axis Shift │ ～ST4
│      Elevation Angle     │
└──────────────────────────┘
             │
             ▼
┌──────────────────────────┐
│  Calculate Rotation Angles │ ～ST5
│    of Two Wedge Prisms   │
└──────────────────────────┘
             │
             ▼
┌──────────────────────────┐
│    Control Rotation of   │ ～ST6
│       Wedge Prisms       │
└──────────────────────────┘
             │
             ▼
┌──────────────────────────┐
│ Start Wind Speed Measurement │ ～ST7
└──────────────────────────┘
```

```
┌──────────────────────────┐
│    Start Beam Scanning   │ ～ST8
└──────────────────────────┘
             │
             ▼
┌──────────────────────────┐
│  Acquire Information of Beam │ ～ST9
│    Scanning Direction    │
│  (Azimuth, Elevation Angle) │
└──────────────────────────┘
             │
             ▼
┌──────────────────────────┐
│  Calculate Rotation Angle │ ～ST10
│      of Dove Prism       │
└──────────────────────────┘
             │
             ▼
┌──────────────────────────┐
│ Control Rotation of Dove Prism │ ～ST11
└──────────────────────────┘
             │
             ▼
          ╱ST12╲
        ╱  Is Wind  ╲
      ╱ Speed Measurement ╲  NO
      ╲    Finished?   ╱
        ╲          ╱
             │ YES
             ▼
        ┌──────────┐
        │   End    │
        └──────────┘
```

# FIG. 6

→ Transmission Light
⇢ Reception Light (Without Beam Scanning)
⇒ Reception Light (With Beam Scanning)

Beam Scanning Control Information

Beam Scanning Optical System Controlling Unit — 11

Beam Scanning Optical System — 10

Mirror Azimuth
Mirror Elevation Angle

Beam Scanning

Ad

Target Value of Optical Axis Shift Azimuth Correction

Azimuth Correction Unit — 13A

12A

Target Value of Optical Axis Shift Azimuth Correction,
Optical Axis Shift Elevation Angle

Signal Processing Unit — 7

6

Reception Side Optical System — 5

Elevation Angle Correction Unit — 14

Light Source — 1

2

3

Transmission Side Optical System — 4

Transmission and Reception Separating Unit — 8

Return Mirror — 9

15

# FIG. 7

# FIG. 8

```
                    ┌─────────┐
                    │  Start  │
                    └─────────┘
                         │
                         ▼
        ┌──────────────────────────────┐
        │ Set Target Value of Optical Axis │──ST1a
        │   Shift Azimuth Correction   │
        └──────────────────────────────┘
                         │
                         ▼
        ┌──────────────────────────────┐
        │      Set Beam Scanning       │──ST2a
        │      Angular Velocity        │
        └──────────────────────────────┘
                         │
                         ▼
        ┌──────────────────────────────┐
        │  Set Wind Speed Measurement  │
        │ Distance for Which Optical Axis │──ST3a
        │ Angular Shift Is to Be Corrected │
        └──────────────────────────────┘
                         │
                         ▼
        ┌──────────────────────────────┐
        │   Calculate Optical Axis Shift   │──ST4a
        │      Elevation Angle         │
        └──────────────────────────────┘
                         │
                         ▼
        ┌──────────────────────────────┐
        │   Calculate Rotation Angles   │──ST5a
        │    of Two Wedge Prisms       │
        └──────────────────────────────┘
                         │
                         ▼
        ┌──────────────────────────────┐
        │     Control Rotation of      │──ST6a
        │       Wedge Prisms           │
        └──────────────────────────────┘
                         │
                         ▼
        ┌──────────────────────────────┐
        │  Start Wind Speed Measurement │──ST7a
        └──────────────────────────────┘
```

```
        ┌──────────────────────────────┐
        │      Start Beam Scanning     │──ST8a
        └──────────────────────────────┘
                         │
                         ▼
        ┌──────────────────────────────┐
        │  Acquire Information of Beam  │
        │      Scanning Direction      │──ST9a
        │  (Azimuth, Elevation Angle)  │
        └──────────────────────────────┘
                         │
                         ▼
        ┌──────────────────────────────┐
        │    Calculate Rotation Angle   │──ST10a
        │      of Group of Mirrors     │
        └──────────────────────────────┘
                         │
                         ▼
        ┌──────────────────────────────┐
        │     Control Rotation of      │──ST11a
        │      Group of Mirrors        │
        └──────────────────────────────┘
                         │
                         ▼
                    ST12a
              ◇ Is Wind          ◇
              Speed Measurement    ──NO
              Finished? ◇
                         │ YES
                         ▼
                    ┌─────────┐
                    │   End   │
                    └─────────┘
```

# FIG. 9

Legend:
- → Transmission Light
- ┈┈⇢ Reception Light (Without Beam Scanning)
- ⟹ Reception Light (With Beam Scanning)

# FIG. 10

a
b
13B
Azimuth Correction Unit
θ
ψ(t)
18
24
$\varphi_1(t)$
Rotation Information Processing Unit
19A
Rotation Control
Dove Prism Rotation Controlling Unit
a
b
θ
ψ(t) = ψ₀
A

# FIG. 11

Start

Set Target Value of Optical Axis Shift Azimuth Correction —ST1b

Set Beam Scanning Angular Velocity —ST2b

Set Wind Speed Measurement Distance for Which Optical Axis Angular Shift Is to Be Corrected —ST3b

Calculate Optical Axis Shift Elevation Angle —ST4b

Calculate Rotation Angles of Two Wedge Prisms —ST5b

Control Rotation of Wedge Prisms —ST6b

Calculate Rotation Angle of Dove Prism —ST7b

Start Wind Speed Measurement —ST8b

Control Rotation of Mirrors of Beam Scanning Optical System —ST9b

Control Rotation of Dove Prism —ST10b

Is Wind Speed Measurement Finished? —ST11b

NO

YES

End

**EP 3 789 786 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016117159 A